Europäisches Patentamt

European Patent Office

Office européen des brevets

(11) Veröffentlichungsnummer: **0 219 631**
A2

## (12) EUROPÄISCHE PATENTANMELDUNG

(21) Anmeldenummer: **86110908.0**

(22) Anmeldetag: **07.08.86**

(51) Int. Cl.⁴: **G 01 L 9/04**

(30) Priorität: 25.09.85 DE 3534162

(43) Veröffentlichungstag der Anmeldung:
29.04.87 Patentblatt 87/18

(84) Benannte Vertragsstaaten:
DE FR GB IT

(71) Anmelder: ROBERT BOSCH GMBH
Postfach 50
D-7000 Stuttgart 1(DE)

(72) Erfinder: Dobler, Klaus, Dr.-Ing.
Bettäckerstrasse 12
D-7016 Gerlingen(DE)

(72) Erfinder: Hachtel, Hansjörg, Dipl.-Ing. (FH)
Buchenstrasse 4
D-7251 Weissach(DE)

(54) **Widerstandsdrucksensor.**

(57) Der Widerstandsdrucksensor weist zwei Meßelemente (16, 19) auf, deren Ohm'scher Widerstand sich unter Druck ändert. Die beiden Elemente werden durch ein Spannelement (20) unter Vorspannung gesetzt. Sie sind derart angeordnet, daß bei Einwirkung des Druckmediums sich die Vorspannung des einen Elements verringert, während sich diejenige des anderen Elements um denselben Betrag vergrößert. Die Widerstandsänderungen werden durch Anordnung der Elemente in einer Wheatstone'schen Brücke gemessen.

FIG. 1

EP 0 219 631 A2

Croydon Printing Company Ltd.

R. 20235
12.9.1985 Wd/Kc

0219631

1

ROBERT BOSCH GMBH, 7000 Stuttgart 1


## Widerstandsdrucksensor

Stand der Technik

Die Erfindung geht aus von einem Widerstandsdrucksensor nach der Gattung des Hauptanspruchs. Bei derartigen bekannten Drucksensoren verändert sich unter Druckeinwirkung bei verschiedenen Stoffen (z. B. Metalle, Kohleschicht - sowie Dick- und Dünnschichtwiderstände) deren Ohm'scher Widerstand. Dieser Effekt wird zur Messung von Drücken ausgenützt. Nachteilig ist, daß der Widerstandswert solcher druckempfindlicher Stoffe auch von der Temperatur abhängt. Bei einem bekannten Drucksensor hat man, um die durch Temperaturschwankungen begründete Nullpunktsdrift zu vermindern, in einem, dem ersten Element benachbarten Brückenzweig ein zweites, vorzugsweise baugleiches passives Element eingefügt, das an einer der Druckeinwirkung nicht zugänglichen Stelle angebracht ist. Dieses Element erfährt zwar nahezu die gleiche Wärmeeinwirkung, ist jedoch nicht dessen Druckschwankungen ausgesetzt.

. . .

Vorteile der Erfindung

Der erfindungsgemäße Drucksensor mit den kennzeichnenden Merkmalen des Hauptanspruchs hat den Vorteil, die Empfindlichkeit der driftkompensierten Druckwiderstandselemente zu verdoppeln und ermöglicht eine lineare Eichkennlinie auch bei solchen Stoffen, deren Verhältnis Druckänderung/Widerstandsänderung nicht über dem gesamten Belastungsbereich konstant ist.

Weitere vorteilhafte Ausgestaltungen der Erfindung ergeben sich aus den Unteransprüchen.

Zeichnung

Ein Ausführungsbeispiel der Erfindung ist in der Zeichnung dargestellt und in der nachfolgenden Beschreibung näher erläutert. Es zeigen Figur 1 einen Widerstands-Drucksensor im Schnitt, Figur 2 ein Schaltbild, Figur 3 ein Diagramm.

Beschreibung des Ausführungsbeispiels

In ein Maschinenteil 10, z. B. das Saugrohr einer Brennkraftmaschine, ist eine Hohlschraube 11 eingeschraubt, die einen zylindrischen Hohlraum 12 aufweist. Im Boden 13 der Hohlschraube ist eine durchgehende Bohrung 14 ausgebildet, die mit dem Saugrohr in Verbindung steht. Im Hohlraum 12 befindet sich nahe des Bodens eine Scheibe 15, und zwischen dieser und dem Boden ist ein Ring 16 angeordnet, der aus einem Werkstoff besteht, dessen Ohm'scher Widerstand sich unter Druckeinwirkung ändert. Dies kann beispielsweise ein Metall oder eine Kohleschicht - sowie Dick- und Dünnschichtwiderstand sein.

...

Der Durchmesser des Rings ist etwas kleiner als der Durchmesser der Scheibe. Zwischen dem Ring 16 und der Bohrung 14 ist ein ringförmiges Dichtelement 17 so angeordnet, daß kein Druckmedium an den Ring 16 gelangen kann.

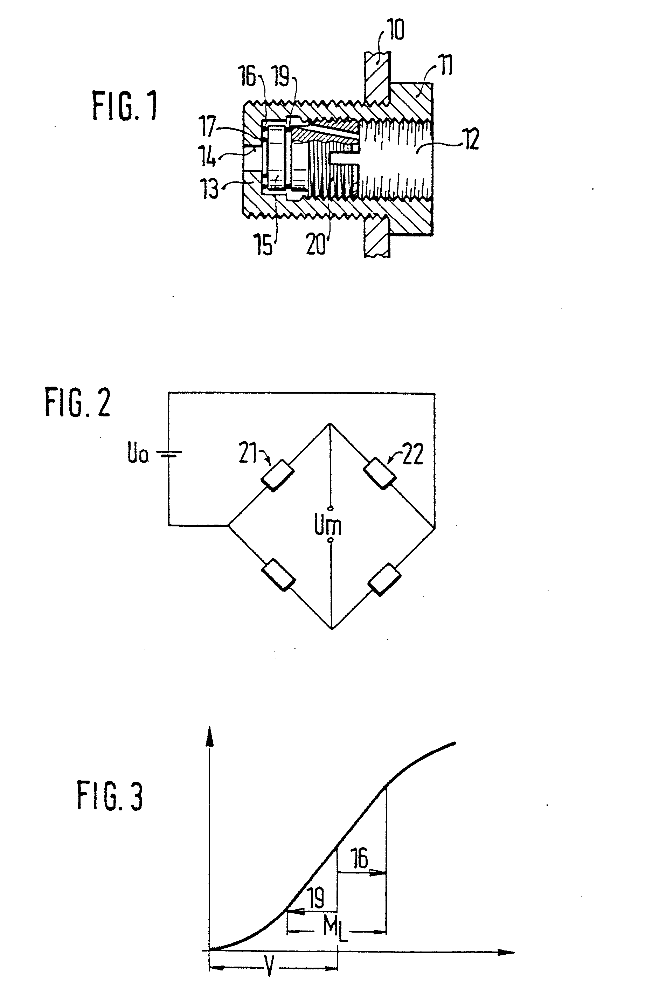

An der anderen Stirnseite der Scheibe befindet sich ein Ring 19, dessen Durchmesser etwa demjenigen des Rings 16 entspricht und der vorzugsweise aus demselben Werkstoff hergestellt ist. In den Hohlraum 12 ist eine Schraube 20 eingeschraubt, die die Ringe 16, 19 und die Scheibe 15 derart belastet, daß den Ringen 16, 19 eine mehr oder weniger starke Vorspannung erteilt wird. Dadurch werden die Ringe einem bestimmten Druck ausgesetzt. Der zu messende Druck des Meßmediums drückt durch die Bohrung 14 auf die Scheibe 15. Dadurch verringert sich die Vorspannkraft auf den Ring 16, während sich die Vorspannkraft auf den Ring 19 um genau dasselbe Maß erhöht. Entsprechend dazu verändern sich gegensinnig deren Ohm'sche Widerstandswerte. Die Umsetzung dieser Effekte auf eine Meßspannungsschwankung $\triangle U_m$ erfolgt mit einer Wheatstone'schen Brücke, die in Figur 2 dargestellt ist. Sie weist zwei aktive Zweige 21, 22 auf, wobei im Zweig 21 der Ring 16 und im Zweig 22 der Ring 19 verschaltet sind, deren Widerstandsänderung als Meßspannungsschwankung $U_m$ abgenommen wird.

Die Scheibe 15 muß so ausgebildet sein, daß sie sich unter Druck nicht verbiegt. Das Dichtelement 17 darf durch die erzeugte Vorspannung nicht in Mitleidenschaft gezogen werden. Der Widerstands-Drucksensor kann auch als Kraftsensor verwendet werden, wenn die zu messende Kraft direkt über einen Stößel auf die Scheibe 15 geleitet wird.

...

Oftmals ist der Verlauf der Eichkennlinien der Druckwiderstandssensoren nur über einen Teilbereich linear.
Insbesondere bei geringer Druckbeanspruchung ist das
Verhältnis Widerstandsänderung zu Druckänderung nicht
hinreichend genau proportional. Mit Hilfe eines optimal
gewählten Vordrucks V kann man die druckempfindlichen
Elemente (Ringe) so weit vorspannen, daß der Sensor
nur im Proportionalbereich mißt. Dies ist aus dem Diagramm nach Figur 3 zu erkennen. Hier ist die Widerstandsänderung eines Elements über dem Meßdruck aufgetragen; dabei ist V der Vordruck, $M_L$ der nahezu lineare
Meßbereich des beschriebenen Sensors.

Bekanntermaßen ermöglicht die Wheatstone'sche Halbbrücke, sofern die beiden druckempfindlichen Elemente
in zwei benachbarten Zweigen angebracht sind und deren
Widerstandswert sich erfindungsgemäß während der Messung
gegensinnig verändern, eine proportionale Umsetzung der
Widerstandswerte in entsprechende Spannungswerte. Die
von einer Temperaturschwankung $\Delta t$ bewirkte Nullpunktsdrift der Meßspannung $V_M$ wird weitgehend unterdrückt,
da - aufgrund der räumlichen Nähe - beide Elemente nahezu das gleiche Wärmeerlebnis erfahren, so daß die von
$\Delta t$ verursachten Widerstands-Änderungen gleichsinnig
erfolgen und somit von der Brückenschaltung kompensiert
werden.

ROBERT BOSCH GMBH, 7000 Stuttgart 1

Ansprüche

1. Widerstandsdrucksensor mit zwei ihren Ohm'schen Widerstand unter Druck ändernden, druckempfindlichen Elementen, die sich zwecks Verminderung der Nullpunktsdrift infolge Temperaturschwankungen in benachbarten Zweigen einer Wheatstone'schen Brückenschaltung oder eines Spannungsteilers räumlich voneinander getrennt in oder an einem Gehäuse befinden, dadurch gekennzeichnet, daß die Elemente (16, 19) derart unter mechanischer Vorspannung im Gehäuse angeordnet sind, daß bei Einwirkung der zu messenden Kraft sich die Vorspannung des einen Elements erhöht, während sich diejenige des anderen um denselben Betrag verringert.

2. Sensor nach Anspruch 1, dadurch gekennzeichnet, daß das Gehäuse einen Hohlraum (12) aufweist, in dem sich eine durch eine Druckschraube belastete, nicht durchbiegbare Platte (15) befindet, auf deren einander gegenüberliegenden Seiten sich die Elemente (16, 19) befinden, von denen eines an die Gehäusewand gepreßt wird, in der sich eine durchgehende Öffnung (14) für den Zutritt des Druckmediums befindet, das mit den Elementen nicht in Berührung kommt.

...

3. Sensor nach Anspruch 1 oder 2, dadurch gekennzeichnet, daß das Gehäuse als Hohlschraube (11) ausgebildet und ein Innengewinde (12) aufweist, in das die Druckschraube (20) eingeschraubt ist, die die Vorspannkraft für die Elemente erzeugt.

4. Sensor nach einem der Ansprüche 1 bis 3, dadurch gekennzeichnet, daß die Elemente in Ringform ausgebildet sind und gegenüber dem Druckmedium mit Dichtelementen abgedichtet sind.

FIG. 1

FIG. 2

FIG. 3